# EUROPÄISCHE PATENTSCHRIFT

(11) **EP 0 826 537 B1**
(45) Veröffentlichungstag und Bekanntmachung des Hinweises auf die Patenterteilung: **17.10.2001**
(21) Anmeldenummer: 97113939.9
(22) Anmeldetag: 13.08.1997
(51) Int. Cl.: B60J 7/14

(54) **Dachkonstruktion für ein Kraftfahrzeug, insbesondere für einen Personenkraftwagen**
Vehicle roof construction,especially for passenger motor vehicle
Construction de toit pour véhicule, en particulier pour véhicule de passagers

(30) Priorität: 27.08.1996 DE 19634510
(43) Veröffentlichungstag der Anmeldung: 04.03.1998
(73) Patentinhaber: DaimlerChrysler AG, 70567 Stuttgart (DE)
(72) Erfinder: Jambor, Arno, 71665 Vaihingen (DE); Wagner, Oliver, 70794 Filderstadt (DE)

(56) Entgegenhaltungen:
- DE-C- 4 438 190
- FR-A- 733 380
- US-A- 5 490 709

## Beschreibung

Die Erfindung bezieht sich auf eine Dachkonstruktion für ein Kraftfahrzeug, insbesondere für einen Personenkraftwagen, mit einem in einer geschlossenen Funktionsposition an einen Windschutzrahmen der Fahrzeugkarosserie anschließenden, formstabilen vorderen Dachteil, sowie mit einem die C-Säulenabschnitte bildenden und mit einer Heckscheibe versehenen formstabilen hinteren Dachteil, die schwenkbeweglich miteinander verbunden und mittels eines Steuermechanismus zwischen einer abgesenkten Ruheposition und einer geschlossenen Funktionsposition beweglich sind, wobei das hintere Dachteil in seiner abgesenkten Ruheposition derart um eine horizontale Querachse verschwenkt ist, daß die hinteren Enden der C-Säulenabschnitte - auf die Fahrzeuglängsrichtung bezogen - nach vorne ragend ausgerichtet sind, wobei die C-Säulenabschnitte zumindest in der abgesenkten Ruheposition und zumindest über einen Teil ihrer Länge - von ihren hinteren Enden ausgehend - ohne Querverbindung frei abragen.

Eine solche Dachkonstruktion ist aus dem US-Patent 5 490 709 bekannt. Die Dachkonstruktion für ein Cabriolet weist einen vorderen Dachteil sowie einen hinteren Dachteil auf, die beide formstabil gestaltet sind. Die beiden Dachteile sind zusammenklappbar und in eine versenkte Ruheposition hinter den Vordersitzen des Fahrzeuginnenraumes absenkbar. Der hintere Dachteil weist C-Säulenabschnitte auf, die in der abgesenkten Ruheposition über einen Teil ihrer Länge ohne Querverbindung frei abragen und mit diesen Längenabschnitten den vorderen Dachteil seitlich flankieren.

Eine weitere Dachkonstruktion ist bei Mercedes-Benz SLK-Roadstern bekannt. Die Dachkonstruktion weist eine vordere, formstabile Dachschale auf, die in der geschlossenen Funktionsposition an einem Windschutzquerträger der Fahrzeugkarosserie verriegelt ist. In Fahrzeuglängsrichtung nach hinten schließt an den vorderen Dachteil ein hinterer Dachteil in Form einer formstabilen Dachschale an, die schwenkbeweglich mit der vorderen Dachschale verbunden ist. Die hintere Dachschale weist zwei eine Heckscheibe seitlich flankierende C-Säulenabschnitte auf. Im Bereich der unteren Enden der C-Säulenabschnitte ist die hintere Dachschale um eine fahrzeugfeste und quer zur Fahrzeuglängsrichtung verlaufende Schwenkachse derart schwenkbeweglich gelagert, daß das hintere Dachteil in einer abgesenkten Ruheposition derart in einem Stauraum des Kraftfahrzeugs abgelegt ist, daß die C-Säulenabschnitte der hinteren Dachschale nach vorne abragen. Der Stauraum befindet sich in einem Heckbereich der Fahrzeugkarosserie. Für das Verstauen von Transportgegenständen verbleibt bei abgesenkter Dachkonstruktion lediglich ein äußerst geringer Restraum.

Aufgabe der Erfindung ist es, eine Dachkonstruktion der eingangs genannten Art zu schaffen, die einen vergrößerten Stauraum in einem Heckbereich des Kraftfahrzeugs zur Verfügung stellt.

Diese Aufgabe wird dadurch gelöst, daß Steuerungsmittel zum Vorverlagern des hinteren Dachteiles in Fahrzeuglängsrichtung derart vorgesehen sind, daß die C-Säulenabschnitte in der Ruheposition zumindest teilweise einen Fondbereich des Fahrzeuginnenraumes seitlich flankieren.

Dadurch wird das hintere Dachteil, an dem das vordere Dachteil angelenkt ist, entweder während des Absenkvorganges oder nach dem Absenken in den Stauraum zusätzlich um einen bestimmten Betrag nach vorne verlagert, so daß im Heckbereich des Personenkraftwagens ein um den nach vorne verlagerten Weg der Dachkonstruktion vergrößerter Stauraum zur Verfügung steht. Vorteilhaft wird dazu der zu beiden Seiten neben dem Fondbereich des Fahrzeuginnenraumes innerhalb der Fahrzeugkarosserie zur Verfügung stehende Raum verwendet. Bei einem offenen Personenkraftwagen ist häufig ein solcher Raum naturgemäß bereits durch einen in der Draufsicht U-förmigen Verdeckkasten vorhanden. Zwischen dem seitlichen Abschluß des Fondbereiches des Fahrzeuginnenraumes sowie der Außenhaut der Fahrzeugkarosserie ist somit üblicherweise ein ausreichender Raum vorhanden, um die C-Säulenabschnitte des hinteren Dachteiles und damit die gesamte Dachkonstruktion nach vorne verlagern zu können. Voraussetzung dafür ist erfindungsgemäß jedoch, daß die Heckscheibe zwischen den C-Säulenabschnitten derart angeordnet ist, daß zumindest in der abgesenkten Ruheposition die C-Säulenabschnitte über einen Teil ihrer Länge frei abragen. Dieses erfindungsgemäße Merkmal kann entweder dadurch erzielt werden, daß eine relativ kurze und gegenüber den Enden der C-Säulenabschnitte zurückspringende Heckscheibe vorgesehen ist, oder aber dadurch, daß die Heckscheibe lösbar an dem hinteren Dachteil angeordnet ist und für die abgesenkte Ruheposition in einfacher Weise von dem hinteren Dachteil getrennt wird. In gleicher Weise ist es auch möglich, die Heckscheibe über ihre Länge zweiteilig auszubilden und lediglich den zwischen den hinteren Enden der C-Säulenabschnitte befindlichen Teil beim Absenken in die Ruheposition zu entfernen oder zu verlagern.

Weitere Vorteile und Merkmale der Erfindung ergeben sich aus den Unteransprüchen.

In erster Ausgestaltung der Erfindung ist eine als Querverbindung im Bereich der unteren Enden der C-Säulenabschnitte dienende Heckscheibe trennbar zu den C-Säulenabschnitten an dem hinteren Dachteil angeordnet. Die Heckscheibe kann dabei gelenkig an dem hinteren Dachteil gelagert sein und gemeinsam mit der Dachkonstruktion im Heckbereich der Fahrzeugkarosserie ablegbar sein, wobei die Heckscheibe in der abgelegten Ruheposition eine die C-Säulenabschnitte freigebende Position einnimmt. Alternativ kann die Heckscheibe von dem hinteren Dachteil entfernt und separat zu der Dachkonstruktion im Fahrzeug verstaut werden.

In weiterer Ausgestaltung der Erfindung ist die Heckscheibe zumindest teilweise gegenüber den C-Säulenabschnitten derart zurückspringend an dem hinteren Dachteil angeordnet, daß die C-Säulenabschnitte über einen Teil ihrer Länge frei abragen. Bei geschlossenen Sportwagen (Ferrari) ist es bekannt, die Heckscheibe unmittelbar im Anschluß an den Fondbereich des Fahrzeuginnenraumes steil aufgestellt zu positionieren und die C-Säulenabschnitte gegenüber dieser Heckscheibe weiter nach hinten zu ziehen. Analog ist der hintere Dachteil des vorliegenden offenen Personenkraftwagens gestaltet, indem die C-Säulenabschnitte über der steil ausgerichteten Heckscheibe - auf die geschlossene Funktionsposition bezogen - weiter nach hinten gezogen sind.

In weiterer zweckmäßiger Ausgestaltung der Erfindung sind das vordere und der hintere Dachteil mittels eines oberen Parallelogrammgestänges aus ihrer geschlossenen Funktionspositions absenkbar, und die beiden unteren Lagerpunkte des oberen Parallelogrammgestänges sind Teil einer karosseriefest abgestützten, unteren, als Steuerungsmittel dienenden Führungsanordnung. Dadurch ist es möglich, die als Basis dienenden unteren Lagerpunkte des für die Absenkbewegung der beiden Dachteile verantwortlichen Parallelogrammgestänges in einfacher Weise nach vorne zu verlagern, wodurch auch die Dachkonstruktion in der abgesenkten Ruheposition nach vorne verlagert ist.

In vorteilhafter Ausgestaltung der Erfindung ist dabei die untere Führungsanordnung als Parallelogrammgestänge ausgebildet. Dies ist eine besonders einfache Lösung, um eine Vorverlagerung der Dachteile zu erzielen.

In weiterer Ausgestaltung der Erfindung sind das obere und das untere Parallelogrammgestänge auf beiden Seiten der Dachteile mit identischen Gestängeteilen versehen, denen für die Gleichsetzung ihrer Bewegungsvorgänge Synchronisationsmittel zugeordnet sind. Dadurch wird eine besonders gute Funktionssicherheit der Parallelogrammgestänge gewährleistet.

In weiterer Ausgestaltung der Erfindung sind Zwangsführungsmittel zwischen dem oberen und dem unteren Parallelogrammgestänge zur synchronen Überlagerung der Bewegungen der beiden Parallelogrammgestänge vorgesehen. Dadurch wird die Zeit für einen Absenkvorgang oder einen Anhebevorgang der Dachkonstruktion reduziert, da das Absenken und das Vorverlagern der Dachkonstruktion gleichzeitig erfolgen kann.

In weiterer Ausgestaltung der Erfindung ist als Zwangsführungsmittel eine an dem hinteren Dachteil angreifende und fahrzeugfest gelagerte Schwenkhebelanordnung vorgesehen. Die mechanisch einfache Gestaltung gestattet eine lange und wartungsfreie Funktionssicherheit. Dies ist ein Vorteil gegenüber einer anderen erfindungsgemäßen Ausgestaltung, bei der als Zwangsführungsmittel ein entsprechender Zugmitteltrieb in Form eines Ketten- oder eines Riementriebes vorgesehen ist, dem eine Spannvorrichtung zum Ausgleichen von Längungen der Zugmittel zugeordnet sein muß.

In weiterer Ausgestaltung der Erfindung ist die Schwenkhebelanordnung als Antriebsteil für die Öffnungs- und Schließbewegung einer einen Stauraum für die Dachkonstruktion verschließenden Abdeckklappe vorgesehen. Dadurch weist die Schwenkhebelanordnung eine Doppelfunktion auf, indem sie sowohl zur Steuerung der Abdeckklappe als auch zur Synchronisierung der Bewegungen der beiden Parallelogrammgestänge dient. Dadurch kann die Schwenkhebelanordnung über eine entsprechende Kinematik oder auch direkt mit der Abdeckklappe verbunden sein.

In der nachfolgenden Beschreibung werden bevorzugte Ausführungsbeispiele der Erfindung anhand der Zeichnungen näher dargestellt. Es zeigen:
- Fig. 1: schematisch einen mit einer Ausführungsform einer erfindungsgemäß ausgeführten Dachkonstruktion versehenen offenen Personenkraftwagen, wobei die Dachkonstruktion sowohl in ihrer abgesenkten Ruheposition als auch in ihrer geschlossenen Funktionsposition dargestellt ist,
- Fig. 2: eine weitere Ausführungsform der Dachkonstruktion für einen offenen Personenkraftwagen, bei dem der hintere Dachteil mit einer trennbar angeordneten Heckscheibe versehen ist,
- Fig. 3: schematisch die Draufsicht auf die in einem Heckbereich der Fahrzeugkarosserie abgelegte Dachkonstruktion nach Fig. 2,
- Fig. 4: in vergrößerter Darstellung den Steuermechanismus zum Absenken und Vorverlagern der beiden Dachteile der Dachkonstruktion nach Fig. 1,
- Fig. 5: in vergrößerter Darstellung ein unteres Parallelogrammgestänge des Steuermechanismus nach Fig. 4 zur Vorverlagerung der zusammengeklappten Dachkonstruktion,
- Fig. 6: in vergrößerter Darstellung die Anordnung der Dachkcnstruktion in einem Heckbereich des Personenkraftwagens in der abgesenkten und vorverlagerten Ruheposition,
- Fig. 7: in perspektivischer Darstellung den Steuermechanismus für die Dachkonstruktion nach den Fig. 1 und 4 bis 6,
- Fig. 8: schematisch eine weitere Ausführungsform der Dachkonstruktion in der geschlossenen Funktionsposition, bei der zur Synchronisation der Klappbewegungen und der Vorverlagerungsbewegung der Dachkonstruktion eine Schwenkhebelanordnung vorgesehen ist,
- Fig. 9: die Dachkonstruktion nach Fig. 8 in einer halboffenen Zwischenstellung, und
- Fig. 10: die Dachkonstruktion nach den Fig. 8 und 9 in ihrer zusammengeklappten und nach vorne verlagerten Ruheposition.

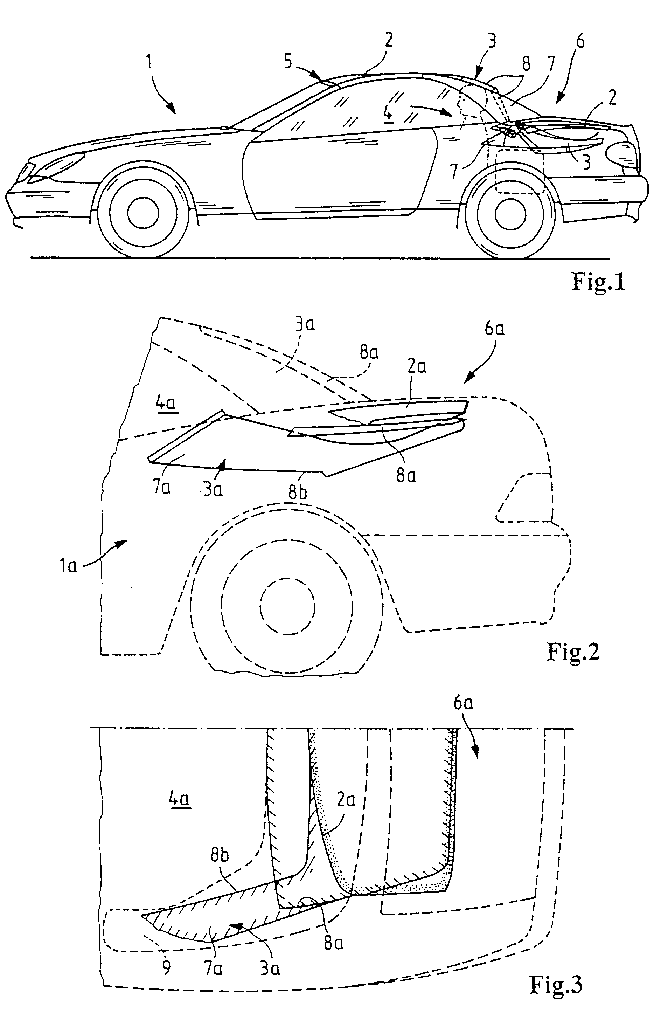

Ein Personenkraftwagen 1 weist gemäß Fig. 1 einen aus einem Fahrerbereich und einem Fondbereich 4 zusammengesetzten Fahrzeuginnenraum auf, der nach vorne durch eine Windschutzscheibe, zwei seitliche A-Säulen der Fahrzeugkarosserie sowie einen die beiden A-Säulen oberhalb der Windschutzscheibe miteinander verbindenden Windschutzquerträger 5 begrenzt ist. Nach oben und nach hinten wird der Fahrzeuginnenraum durch einen vorderen Dachteil 2 und einen hinteren Dachteil 3 begrenzt, die zwischen einer den Fahrzeuginnenraum verschließenden Funktionsposition und einer in einem Heckbereich 6 des Personenkraftwagens abgesenkten Ruheposition beweglich sind. Sowohl das Dachteil 2 als auch das Dachteil 3 sind schalenartig formstabil aus einem entsprechenden Kunststoffmaterial oder aus Blechpreßteilen aufgebaut. Das vordere Dachteil 2 schließt an den Windschutzquerträger 5 an und ist in der geschlossenen Funktionsposition mittels einer Verriegelung an diesem festgelegt. Das vordere Dachteil 2 erstreckt sich in Fahrzeuglängsrichtung nach hinten bis etwa auf Höhe des übergangs des Fahrers- in den Fondbereich des Fahrzeuginnenraumes. In Fahrzeuglängsrichtung nach hinten schließt an das vordere Dachteil 2 das hintere Dachteil 3 an, das mittels einer Scharnieranordnung um eine horizontale und quer zur Fahrzeuglängsrichtung verlaufende Schwenkachse 12 an dem vorderen Dachteil 2 schwenkbeweglich gelagert ist. Das Dachteil 3 weist einen bündig an das vordere Dachteil 2 anschließenden Dachbereich auf, der zu beiden Seiten in C-Säulenabschnitte 7 übergeht, die sich bis zu einer Fahrzeugbordkante der Fahrzeugkarosserie nach unten erstrecken. Zwischen den beiden C-Säulenabschnitten 7 erstreckt sich eine in Fahrzeuglängsrichtung abgestufte Heckscheibe 8 quer über die Breite des Dachteiles 3, deren unterer Scheibenteil gegenüber den C-Säulenabschnitten 7 steiler angestellt ist. Dadurch ragen die unteren Enden der C-Säulenabschnitte 7 unter Belassung eines nach hinten an die Heckscheibe 8 anschließenden Freiraumes zwischen diesen in der geschlossenen Funktionsposition der Dachkonstruktion frei zum Heckbereich 6 hin nach hinten ab. Diese unteren Enden der C-Säulenabschnitte 7 sind somit finnenartig oder keilartig ausgebildet.

Um die bewegliche Dachkonstruktion, nämlich die Dachteile 2 und 3, aus ihrer geschlossenen Funktionsposition in die in Fig. 1 ebenfalls dargestellte abgesenkte-Ruheposition in dem Heckbereich 6 des Personenkraftwagens 1 abzusenken, wird zunächst die Verriegelung des vorderen Dachteils 2 am Windschutzquerträger 5 gelöst. Anschließend wird mittels eines nachfolgend näher beschriebenen Steuermechanismus sowie mittels einer vorzugsweise hydraulischen, jedoch nicht dargestellten Antriebseinheit der hintere Dachteil 7 um eine im Bereich der unteren Enden der C-Säulenabschnitte 7 vorgesehene horizontale und quer zur Fahrzeuglängsrichtung verlaufende Schwenkachse nach hinten in einen nicht näher dargestellten Stauraum des Heckbereiches 6 hinein verschwenkt. Gleichzeitig wird das mit dem hinteren Dachteil 3 schwenkbeweglich verbundene vordere Dachteil 2 mittels des Steuermechanismus durch eine Parallelverlagerung ebenfalls in den Heckbereich 6 abgesenkt, wobei das vordere Dachteil 2 klappmesserartig auf dem hinteren Dachteil 3 abgelegt wird. Das hintere Dachteil 3 ist in seiner abgesenkten Ruheposition derart ausgerichtet, daß die Stoßkante zum vorderen Dachteil 2 nach hinten und die C-Säulenabschnitte 3 in Fahrzeuglängsrichtung nach vorne abragen. Zusätzlich wird die gesamte, im Heckbereich 6 abgelegte Dachkonstruktion mittels des Steuermechanismus in nachfolgend näher beschriebener Weise in Fahrzeuglängsrichtung nach vorne verlagert, wodurch die Heckscheibe an einem direkt nach hinten an den Fondbereich 4 anschließenden Abschluß des Stauraumes zur Anlage kommt und die finnenartigen freien unteren Enden der C-Säulenabschnitte 7 sich zu beiden Seiten des Fondbereiches 4 in entsprechend nach vorne fortgesetzten Abschnitten des Stauraumes zwischen der seitlichen Karosserieaußenhaut und der benachbarten seitlichen Wandung des Fondbereiches 4 des Fahrzeuginnenraumes nach vorne erstrecken. Durch diese zusätzlich nach vorne erfolgende Verlagerung der Dachkonstruktion werden im Heckbereich 6 die zum Be- und Entladen von Ladegut verbleibende Öffnung sowie der Restkofferraum vergrößert. Beim dargestellten Ausführungsbeispiel nach den Fig. 1 und 4 bis 7 können sich die finnenartigen Enden der C-Säulenabschnitte 7 seitlich nach vorne neben den Fondbereich 4 erstrecken, weil die Heckscheibe 8 - wie beschrieben - relativ steil ausgerichtet ist und somit zwischen den unteren Enden der C-Säulenabschnitte 7 ein Freiraum verbleibt.

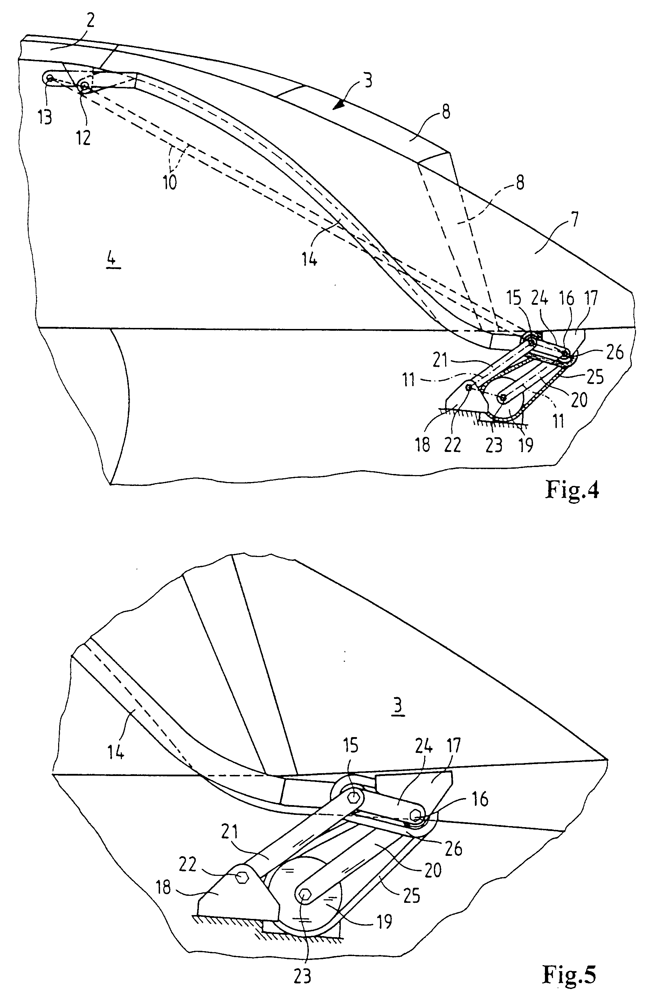

Beim Ausführungsbeispiel nach den Fig. 2 und 3 hingegen ist eine Heckscheibe 8a eines hinteren Dachteiles 3a vorgesehen, die fluchtend mit der Außenhaut des hinteren Dachteiles 3a abschließt und bis zu den unteren Enden der zugeordneten C-Säulenabschnitte des hinteren Dachteiles 3a verläuft. Um dennoch ein Absenken und Vorverlagern der Dachkonstruktion (Dachteile 2a und 3a) analog der zuvor beschriebenen Steuerung der Dachteile 2 und 3 nach Fig. 1 zu ermöglichen, ist bei diesem Ausführungsbeispiel nach den Fig. 2 und 3 die Heckscheibe 8a lösbar in einem Aufnahmeabschnitt 8b des Dachteiles 3a zwischen dessen beiden C-Säulenabschnittenangeordnet. Die Heckscheibe 8a kann mittels eines geeigneten Steuermechanismus gelenkig mit dem vorderen Dachteil 2a verbunden und während des Absenkvorganges aus dem Aufnahmebaschnitt 8b des hinteren Dachteiles 3a gelöst und in die in Fig. 2 dargestellte Position abgelegt werden. Es ist auch möglich, die Heckscheibe 8a ohne eine Verbindung zum vorderen Dachteil 2a ausschließlich lösbar im Aufnahmeabschnitt 8b des hinteren Dachteiles 3a zu halten und die Heckscheibe 8a vor einem Absenken der Dachkonstruktion von dem hinteren Dachteil 3a zu entfernen. Nach dem Absenken der Dachkonstruktion (Teile 2a und 3a) kann die Heckscheibe 8a dann separat in den Stauraum des Heckbereiches 6a abgelegt und insbesondere gemäß Fig. 2 und 3 positioniert werden. Dadurch, daß beim Ausführungsbeispiel nach den Fig. 2 und 3 die C-Säulenabschnitte in ihrer abgesenkten Ruheposition nahezu vollständig frei vom Dachbereich des hinteren Dachteiles 3a nach vorne abragen, kann der Betrag der Vorverlagerung der Dachkonstruktion in Fahrzeuglängsrichtung nach vorne relativ groß bemessen sein, so daß die C-Säulenabschnitte relativ weit in die seitlichen Bereiche eines durch einen Dachkastendeckel 9 abgeschlossenen Stauraumes geschoben werden können. Der Steuermechanismus zum Absenken und Vorverlagern der Dachkonstruktion entspricht in allen wesentlichen Funktionsteilen dem nachfolgend anhand der Fig. 4 bis 7 ausführlich beschriebenen Steuermechanismus für die Dachkonstruktion nach den Fig. 1 und 4 bis 7.

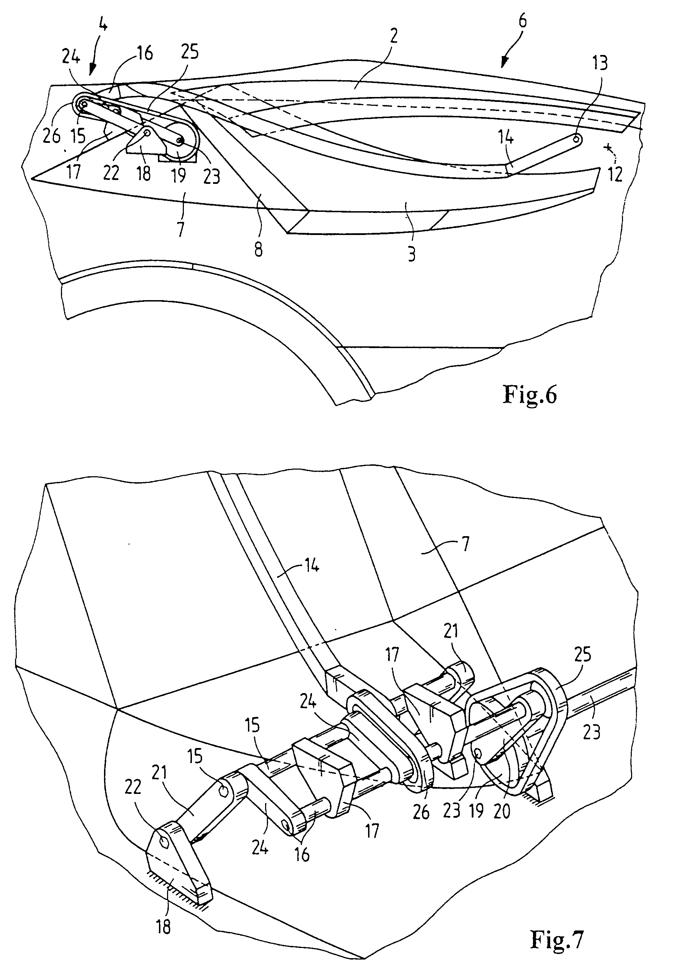

An der Unterseite der unteren Enden der C-Säulenabschnitte 7 sind Lagerböcke 17 (Fig. 4 bis 7) festgelegt, mittels der das hintere Dachteil 3 um eine horizontal und quer zur Fahrzeuglängsrichtung verlaufende Schwenkachse 16 schwenkbeweglich gelagert ist. Gleichzeitig wird das vordere Dachteil 2 mittels eines Parallelogrammgestänges 10, dessen Funktionsschematik gestrichelt dargestellt ist, gemeinsam mit dem Dachteil 3 durch eine nach hinten und nach unten erfolgende Parallelverlagerung auf dem Dachteil 3 abgesenkt. Der eine Parallelogrammhebel des Parallelogrammgestänges 10 wird direkt durch das hintere Dachteil 3 und dessen oberen Lagerpunkt 12 an dem vorderen Dachteil 2 definiert. Der andere Parallelogrammhebel des Parallelogrammgestänges 10 wird durch eine S-artig geschwungene Hebelstange 14 gebildet, die an ihrem unteren Gelenkpunkt an einem Verbindungshebel 24 um eine Gelenkachse 15 und an einem oberen Gelenkpunkt 13 in nicht dargestellter Weise mit dem vorderen Dachteil 2 schwenkbeweglich verbunden ist. Der Verbindungshebel 24 ist seinerseits Teil eines unteren Parallelogrammgestänges 11, dessen Funktionsabschnitte gestrichelt dargestellt sind. Das untere Parallelogrammgestänge 11 ist im Bereich seiner unteren Gelenkpunkte, d.h. im Bereich seiner Basis, karosseriefest gelagert, so daß das obere Parallelogrammgestänge 10 über das untere Parallelogrammgestänge 11 wiederum karosseriefest gelagert ist. Das Parallelogrammgestänge 11 wird zum einen durch einen um eine karosseriefeste Schwenkachse 23 schwenkbeweglichen Parallelogrammhebel 20 und zum anderen durch einen parallelen und um eine weitere karosseriefeste Schwenkachse 22 schwenkbeweglich gelagerten Parallelogrammhebel 21 gebildet. Durch das untere Parallelogrammgestänge 11 erfolgt die Verlagerung der zusammengeklappten Dachkonstruktion in Fahrzeuglängsrichtung, und zwar für die abgesenkte Ruheposition in Fahrzeuglängsrichtung nach vorne und zur erneuten Anhebung in die geschlossene Funktionsposition wieder zurück in Fahrzeuglängsrichtung nach hinten. Zur Stabilisierung der einzelnen Teile des Steuermechanismus sind die Parallelogrammhebel gemäß Fig-. 7 paarweise gestaltet. An der beschriebenen Funktion ändert sich dadurch jedoch nichts. Um den in Fig. 7 dargestellten linken Teil des Steuermechanismus mit dem identisch gestalteten. Teil auf der gegenüberliegenden Seite zu synchronisieren, ist die Schwenkachse 23 mit einer mit dem gleichen Bezugszeichen versehenen Synchronisierungswelle ausgestattet, die sich horizontal quer über die Fahrzeugbreite zu dem gegenüberliegenden Parallelogrammhebel 20 erstreckt. Die Einleitung der Antriebskraft in den als Antriebshebel dienenden Parallelogrammhebel 20 kann über die Synchronisierungswelle erfolgen.

Über einen Zugmitteltrieb, der als Übertragungsmittel dient, sind die beiden Parallelogrammgestänge 10 und 11 derart miteinander gekoppelt, daß sich ihre entsprechenden Bewegungen überlagern. Der Zugmitteltrieb, der beim dargestellten Ausführungsbeispiel als Riementrieb gestaltet ist, weist eine zur Schwenkachse 23 koaxiale und karosseriefest gehaltene Scheibe 19 auf, auf dessen Außenumfang ein umlaufender Riemen 25 bei einer Schwenkbewegung des Parallelogrammhebels 20 abrollt. Das andere Trum des Riemens 25 umschließt ein Scheibenrad, das drehfest mit der Drehachse 16 verbunden ist. Zwischen dem Scheibenrad und der Riemenscheibe 19 ist ein vorgegebenes Übersetzungsverhältnis definiert. Durch eine Betätigung des Hebels 20 mittels der nicht dargestellten Antriebseinheit rollt der Riemen 25 auf der Scheibe 19 ab und dreht gleichzeitig über die Drehachse 16 und die Lagerböcke 17 das hintere Dachteil 3 aus der geschlossenen Funktionsposition nach hinten.

Es ist ein zweiter Riementrieb 26 vorgesehen, der einerseits auf einem zu dem kleinen Scheibenrad des ersten Riementriebs koaxialen und drehfest mit diesem auf der Drehachse 16 angeordneten Scheibenrad und andererseits auf einem an der Hebelstange 14 festgelegten Scheibenrad abrollt. Dadurch wird die Hebelstange 14 durch Aufbringung eines Drehmoments zusätzlich zur Hebellängskraft unterstützt, wodurch das obere Parallelogrammgestänge insbesondere im Bereich seiner Endlagen, in denen es sich nahe einer Totpunktposition befindet, sicher bewegt wird, ohne daß die Gefahr eines Blockierens besteht. Der zweite Riementrieb 26 weist ein Übersetzungsverhältnis von zumindest 1 : 1 auf, wobei das Übersetzungsverhältnis davon abhängt, ob über den Riementrieb eine Verdrehvorspannung auf die Hebelstange 14 aufgebracht werden soll oder nicht. Dadurch wird ein erleichtertes Herausschwenken des vorderen Dachteils 2 aus den Nahe-Totpunktlagen erzielt.

Mittels der beiden Parallelogrammgestänge 10 und 11 ist die Dachkonstruktion somit aus der in Fig. 4 dargestellten geschlossenen Endposition in die in Fig. 6 dargestellte abgesenkte und nach vorn verlagerte Ruheposition überführbar. Durch entsprechend umgekehrte Steuerbewegungen kann die abgelegte Dachkonstruktion dann aus ihrer abgesenkten Ruheposition wieder in die geschlossene Funktionsposition nach den Fig. 1 und 4 überführt werden.

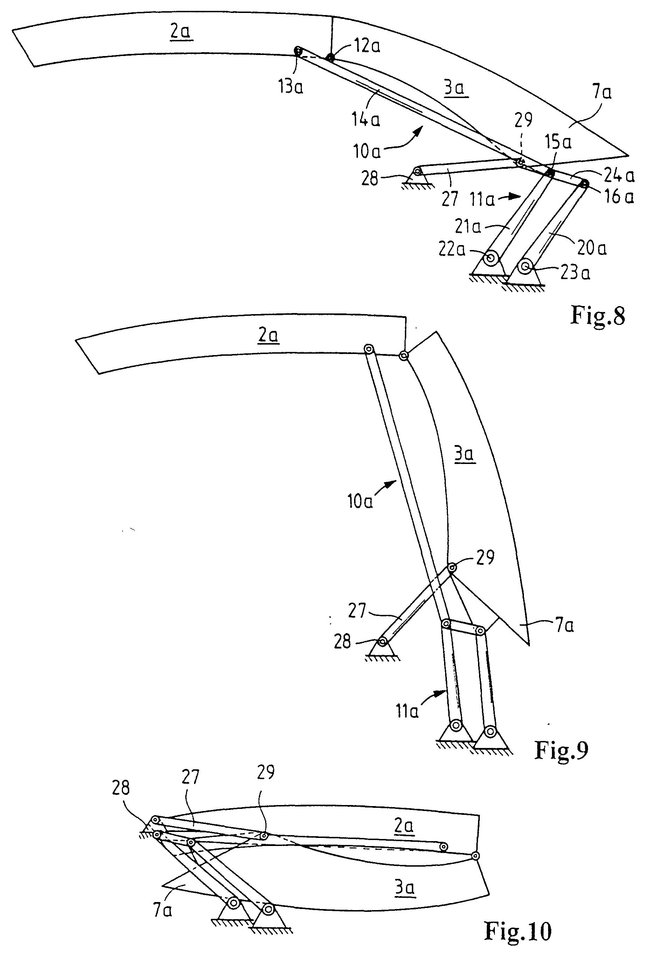

Die Dachkonstruktion nach dem Ausführungsbeispiel der Fig. 8 bis 10 weist ebenfalls ein vorderes Dachteil 2a und ein hinteres Dachteil 3a auf, das mit hinteren C-Säulenabschnitten 7a versehen ist. Auch dieser Dachkonstruktion ist ein oberes Parallelogrammgestänge 10a und ein unteres Parallelogrammgestänge 11a zum Zusammenklappen der Dachkonstruktion und zum Vorverlagern der Dachkonstruktion zugeordnet, wobei sowohl das obere Parallelogrammgestänge 10a als auch das untere Parallelogrammgestänge 11a den Parallelogrammgestängen des Ausführungsbeispiels nach den Fig. 4 bis 7 entsprechen. Dies wird dadurch verdeutlicht, daß für die einzelnen Funktionsteile der Bewegungskinematik die gleichen Bezugszeichen jeweils lediglich unter Hinzufügung des Buchstaben a verwendet wurden. Die mit den gleichen Bezugszeichen versehenen Teile der Parallelogrammgestänge 10a und 11a sind funktionsidentisch mit den entsprechenden Teilen der Parallelogrammgestänge 10 bzw.11 des Ausführungsbeispiels nach den Fig. 4 bis 7, so daß an dieser Stelle eine nähere Erläuterung entbehrlich ist. Zur Synchronisierung der Einklappbewegung der Dachkonstruktion mit der Aushebung und Vorverlagerung der Dachkonstruktion ist beim Ausführungsbeispiel nach den Fig. 8 bis 10 jedoch kein Riementrieb vorgesehen, wie dies bei dem Ausführungsbeispiel nach den Fig. 4 bis 7 der Fall ist, sondern es ist eine Schwenkhebelanordnung 27 vorgesehen. Die Schwenkhebelanordnung 27 greift an einem Gelenkpunkt 29 im Bereich des unteren Endes jedes C-Säulenabschnittes des hinteren Dachteiles 3a an und ist mit ihrem anderen Endbereich an einer fahrzeugfesten Halterung 28 schwenkbeweglich gelagert. Wie aus der Darstellung nach den Fig. 8 bis 10 erkennbar ist, vollführt die Schwenkhebelanordnung 27 während des Absenk- und Vorverlagerungsvorganges der Dachkonstruktion zunächst eine Schwenkbewegung nach oben und anschließend eine Schwenkbewegung nach unten. Selbstverständlich sind die Dimensionierungen der Schwenkhebelanordnung 27 derart an die Abmessungen der beiden Parallelogrammgestänge 10a und 11a angepaßt, daß die Schwenkhebelanordnung in die Gesamtkinematik integriert ist, ohne eine Blockade zu bewirken.

Die Schwenkhebelanordnung 27 dient in nicht dargestellter Weise zusätzlich zum zwangsgesteuerten Öffnen und Schließen einer Abdeckklappe der Fahrzeugkarosserie, die den Stauraum für die Dachkonstruktion verschließt. Durch die Auf- und Niederbewegung der Schwenkhebelanordnung 27 kann die Abdeckklappe kurzzeitig geöffnet werden, während das untere Parallelogrammgestänge 11a nach vorne dreht.

## Patentansprüche

1. Dachkonstruktion für ein Kraftfahrzeug, insbesondere für einen Personenkraftwagen, mit einem in einer geschlossenen Funktionsposition an einen Windschutzrahmen der Fahrzeugkarosserie anschließenden, formstabilen vorderen Dachteil (2), sowie mit einem die C-Säulenabschnitte bildenden und mit einer Heckscheibe (8a) versehenen formstabilen hinteren Dachteil (3 bzw. 3a), die schwenkbeweglich miteinander verbunden sind und mittels eines Steuermechanismus zwischen einer abgesenkten Ruheposition und einer geschlossenen Funktionsposition beweglich sind, wobei der hintere Dachteil (3 bzw. 3a) in seiner abgesenkten Ruheposition derart um eine horizontale Querachse verschwenkt ist, daß die hinteren Enden der C-Säulenabschnitte - auf die Fahrzeuglängsrichtung bezogen - nach vorne ragend ausgerichtet sind, wobei die C-Säulenabschnitte (7 bzw. 7a) zumindest in der abgesenkten Ruheposition und zumindest über einen Teil ihrer Länge - von ihren hinteren Enden ausgehend - ohne Querverbindung frei abragen,
**dadurch gekennzeichnet,**
**daß** Steuerungsmittel (11 bzw. 11a) zum Vorverlagern des hinteren Dachteiles (3 bzw. 3a) in Fahrzeuglängsrichtung derart vorgesehen sind, daß die C-Säulenabschnitte (7 bzw. 7a) in der Ruheposition zumindest teilweise einen Fondbereich (4 bzw. 4a) des Fahrzeuginnenraumes seitlich flankieren.

2. Dachkonstruktion nach Anspruch 1,
**dadurch gekennzeichnet, daß**
eine als Querverbindung im Bereich der unteren Enden der C-Säulenabschnitte (7a) dienende Heckscheibe (8a) trennbar zu den C-Säulenabschnitten (7 bzw. 7a) an dem hinteren Dachteil (3 bzw. 3a) angeordnet ist.

3. Dachkonstruktion nach Anspruch 1,
**dadurch gekennzeichnet, daß**
die Heckscheibe (8a) zumindest teilweise gegenüber den C-Säulenabschnitten (7 bzw. 7a) derart zurückspringend an dem hinteren Dachteil (3 bzw. 3a) angeordnet ist, daß die C-Säulenabschnitte (7 bzw. 7a) über einen Teil ihrer Länge frei abragen.

4. Dachkonstruktion nach einem der vorhergehenden Ansprüche,
**dadurch gekennzeichnet, daß**
das vordere und das hintere Dachteil (2, 3 bzw. 3a) mittels eines oberen Parallelogrammgestänges (10) aus ihrer geschlossenen Funktionsposition absenkbar sind, und daß die beiden unteren Lagerpunkte (.Achse 15 bzw. 16) des oberen Parallelogrammgestänges (10) Teil einer karosseriefest abgestützten, unteren, als Steuerungsmittel dienenden Führungsanordnung (11 bzw. 11a) sind.

5. Dachkonstruktion nach Anspruch 4,
**dadurch gekennzeichnet, daß**
die untere Führungsanordnung als Parallelogrammgestänge (11 bzw. 11a) ausgebildet ist.

6. Dachkonstruktion nach Anspruch 5,
**dadurch gekennzeichnet, daß**
das obere und das untere Parallelogrammgestänge (10, 11 bzw. 11a) auf beiden Seiten der Dachteile (2, 3 bzw. 3a) mit identischen Gestängeteilen versehen sind, denen für die Gleichsetzung ihrer Bewegungsvorgänge Synchronisationsmittel (23) zugeordnet sind.

7. Dachkonstruktion nach einem der vorhergehenden Ansprüche,
**dadurch gekennzeichnet, daß**
Zwangsführungsmittel (19 und 25) zwischen dem
oberen und dem unteren Parallelogrammgestänge (10, 11 bzw. 11a) zur synchronen Überlagerung der Bewegungen der beiden Parallelogrammgestänge vorgesehen sind.

8. Dachkonstrukticn nach Anspruch 7,
**dadurch gekennzeichnet, daß**
als Zwangsführungsmittel eine an dem hinteren Dachteil (3 bzw. 3a) angreifende und fahrzeugfest gelagerte Schwenkhebelanordnung (27) vorgesehen ist.

9. Dachkonstruktion nach Anspruch 8,
**dadurch gekennzeichnet, daß**
die Schwenkhebelanordnung (27) als Antriebsteil für die Öffnungs- und Schließbewegung einer einen Stauraum für die Dachkonstruktion verschließenden Abdeckklappe vorgesehen ist.

10. Dachkonstruktion nach Anspruch 9,
**dadurch gekennzeichnet, daß**
die Schwenkhebelanordnung einstückig mit der Abdeckklappe verbunden ist.

## Claims

1. A roof construction for a motor vehicle, particularly for a private car, with a form-stable front roof part (2) which, in a closed function position, is adjacent a windscreen frame of the vehicle bodywork, and with a form-stable rear roof part (3) or (3a) forming the C-column portions and provided with a rear window (8a), the said roof parts being connected to each other for pivoting movement and being capable of being moved by a control mechanism between a lowered inoperative position and a closed function position, whereby the rear roof part (3 or 3a) is, in its lowered inoperative position, so pivoted about a horizontal transverse axis that the rear ends of the C-column portions - in relation to the longitudinal direction of the vehicle - are directed to project forwards, whereby the C-column portions (7 or 7a), at least in the lowered inoperative position and at least over a part of their length - starting from their rear ends - project freely without any transverse connection, **characterised in that** the control means (11 or 11a) for forward displacement of the rear roof part (3 or 3a) in the longitudinal direction of the vehicle are so provided that the C-column portions (7 or 7a), when in the inoperative position, laterally at least partially flank an area (4 or 4a) at the back of the vehicle interior.

2. A roof construction according to claim 1, **characterised in that** there is on the rear roof part (3, 3a) a windscreen (8a) which serves as a cross-connection in the region of the lower ends of the C-column portions (7a) and which is adapted to be separated from the C-column portions (7, 7a).

3. A roof construction according to claim 2, **characterised in that** the rear window (8a) is disposed at the rear roof part so that it springs back at least partially in relation to the C-column portions (7, 7a) so that the C-column portions (7, 7a) project freely over a portion of their length.

4. A roof construction according to one of the preceding claims, **characterised in that** the front and the rear roof parts (2, 3 or 3a) can be moved by means of an upper parallelogram linkage (10) out of their closed function position and **in that** the two lower bearing points (spindle 15, 16) of the upper parallelogram linkage (10) are part of a supported lower guide arrangement (11, 11a) rigid with the body work and serving as control means.

5. A roof construction according to claim 4, **characterised in that** the lower guide arrangement is constructed as a parallelogram linkage (11, 11a).

6. A roof construction according to claim 5, **characterised in that** the upper and lower parallelogram linkages (10, 11 and 11a) are on both sides of the roof parts (2, 3 or 3a) provided with identical linkage parts with which synchronising means (23) are associated in order to balance their movement processes.

7. A roof construction according to one of the preceding claims, **characterised in that** positive guide means (19 and 25) are provided between the upper and lower parallelogram linkages (10, 11 and 11a) for synchronised superimposition of the movements of the two parallelogram linkages.

8. A roof construction according to claim 7, **characterised in that** provided as the positive guide means is a pivot lever arrangement (27) rigid with the vehicle and engaging the rear roof part (3, 3a).

9. A roof construction according to claim 8, **characterised in that** the pivot lever arrangement (27) is provided as a drive part for the opening and closing movement of a cover flap which closes the stowage space for the roof construction.

10. A roof construction according to claim 9, **characterised in that** the pivot lever arrangement is integrally connected to the cover flap.

## Revendications

1. Construction de toit pour un véhicule automobile, en particulier pour une voiture particulière, avec une partie de toit avant (2) à forme stable, se raccordant à un cadre de pare-brise de la carrosserie de véhicule lorsque l'on se trouve en une position fonctionnelle fermée, ainsi qu'avec une partie de toit arrière (3, respectivement 3a) à forme stable formant les tronçons de colonne C et munie d'une vitre arrière (8a), les parties de toit avant et arrière étant reliées ensemble à pivotement et mobiles au moyen d'un mécanisme de commande, entre une position de repos abaissée et une position fonctionnelle fermée, la partie de toit arrière (3, ou 3a), lorsqu'elle est à sa position de repos abaissée, étant pivotée autour d'un axe transversal horizontal, de manière que les extrémités arrières des tronçons de colonne C - en se référant à la direction longitudinale du véhicule - soient orientées en saillie vers l'avant, les tronçons de colonne C (7, ou 7a) faisant saillie librement au moins dans la position de repos abaissé et au moins sur une partie de leur longueur - en partant de leurs extrémités arrières - sans liaison transversale,
**caractérisée en ce que**
des moyens de commande (11, ou 11a) sont prévus pour le déplacement d'avancement de la partie de toit arrière (3, ou 2a) dans la direction longitudinale du véhicule, de manière que les tronçons de colonne C (7, ou 7a), lorsque l'on est à la position de repos, flanquent latéralement au moins partiellement une zone arrière (4, ou 4a) de l'habitacle du véhicule.

2. Construction de toit selon la revendication 1,
**caractérisée en ce qu'**une vitre arrière (8a), servant de liaison transversale dans la zone des extrémité inférieure des tronçons de colonnes C (7a), est disposée de façon amovible par rapport au tronçon de colonne C (7, ou 7a) sur la partie de toit arrière (3, ou 3a) ;

3. Construction de toit selon la revendication 1,
**caractérisée en ce que** la vitre arrière (8a) est disposée au moins partiellement en retrait par rapport au tronçon de colonne C (7, ou 7a), sur la partie de toit arrière (3, ou 3a), de manière que les tronçons de colonne (C7, ou 7a) fassent saillie librement sur une partie de leur longueur.

4. Construction de toit selon l'une des revendications précédentes, **caractérisée en ce que** la partie de toit avant et la partie de toit arrière (2, 3, ou 3a) sont abaissables depuis leur position fonctionnelle fermée, au moyen d'une tringlerie à parallélogramme supérieur (10), et **en ce que** les deux points de tourillonnement inférieurs (axe 15, ou 16) de la tringlerie à parallélogramme supérieur (10) font partie d'un dispositif de guidage (11, ou 11a), inférieur, servant de moyen de commande, soutenu rigidement sur la carrosserie

5. Construction de toit selon la revendication 4,
**caractérisée en ce que** le dispositif de guidage inférieur est réalisé sous la forme de tringlerie à parallélogramme (11, ou 11a).

6. Construction de toit selon la revendication 4,
**caractérisée en ce que** les tringleries à parallélogramme supérieure et inférieure (10, 11, ou 11 a) sont munies, sur les deux côtés des parties de toit (2, 3, ou 3a), de parties de tringlerie identique, auxquelles sont associés des moyens de synchronisation (23) devant assurer l'identité de leurs processus cinématiques.

7. Construction de toit selon l'une des revendications précédentes, **caractérisée en ce que** des moyens de guidage forcés (19 et 25) sont prévus entre les tringleries à parallélogramme supérieure et inférieure (10, 11, ou 11 a) afin d'obtenir une superposition synchrone des déplacements des deux tringleries à parallélogramme.

8. Construction de toit selon la revendication 7,
**caractérisée en ce qu'**est prévu comme moyen de guidage forcé un dispositif à levier pivotant (27), agissant sur la partie de toit arrière (3, ou 3a) et monté de façon rigide sur le véhicule.

9. Construction de toit selon l'une la revendication 8,
**caractérisée en ce que** le dispositif à levier pivotant (27) est prévu à titre de partie d'entraînement pour le mouvement d'ouverture et de fermeture d'un capot de recouvrement, obturant un espace de rangement prévu pour la construction de toit.

10. Construction de toit selon l'une la revendication 9,
**caractérisée en ce que** le dispositif à levier pivotant est relié d'une seule pièce au capot de recouvrement.
